(19) Europäisches Patentamt
European Patent Office
Office européen des brevets

(11) **EP 4 111 653 B1**

(12) **EUROPEAN PATENT SPECIFICATION**

(45) Date of publication and mention
of the grant of the patent:
**24.05.2023 Bulletin 2023/21**

(21) Application number: **22726040.3**

(22) Date of filing: **27.04.2022**

(51) International Patent Classification (IPC):
*H04L 27/00* (2006.01)    *H04B 10/60* (2013.01)
*H04L 27/22* (2006.01)    *H04L 27/20* (2006.01)

(52) Cooperative Patent Classification (CPC):
**H04L 27/0014; H04L 27/2071; H04L 27/22;**
H04L 2027/0024

(86) International application number:
**PCT/EP2022/061203**

(87) International publication number:
**WO 2022/242997 (24.11.2022 Gazette 2022/47)**

(54) **DIFFERENTIAL PHASE SHIFT KEYING (DPSK-) RECEIVER FOR ADAPTING TO TRANSMITTER IMPERFECTION AND METHOD PERFORMED BY SAID DPSK-RECEIVER**

DPSK-EMPFÄNGER UND DAZUGEHÖRIGES VERFAHREN ZUM AUSGLEICHEN VON SENDEFEHLERN

RÉCEPTEUR À MODULATION PAR DÉPLACEMENT DE PHASE DIFFÉRENTIELLE (DPSK-) POUR ADAPTATION À UNE IMPERFECTION D'ÉMETTEUR ET PROCÉDÉ MIS EN OEUVRE PAR LEDIT RÉCEPTEUR DPSK

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.05.2021 EP 21174377**

(43) Date of publication of application:
**04.01.2023 Bulletin 2023/01**

(73) Proprietor: **Shenzhen Goodix Technology Co., Ltd.
Shenzhen, Guangdong 518045 (CN)**

(72) Inventor: **BURY, Andreas Gerhard
01099 Dresden (DE)**

(74) Representative: **Lippert Stachow Patentanwälte
Rechtsanwälte
Partnerschaft mbB
Krenkelstraße 3
01309 Dresden (DE)**

(56) References cited:
**US-A1- 2005 008 101    US-A1- 2011 090 991**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a differential phase shift keying, DPSK-, receiver for adapting to the imperfection of a transmitter consisting in an undesired time-dependent variation of the carrier-frequency, the receiver comprising means to receive signal packets from the transmitter, a time offset estimation and timed symbol extraction unit configured to output complex symbols $y(k)$ of the signal packet, with k being a symbol index, and to feed $y(k)$ to a frequency offset estimation unit and a frequency offset compensation unit, whereas the frequency offset estimation unit is configured to deliver phase values $s(k)$ of the symbols $y(k)$ and the frequency offset compensation unit is configured to compensate the received symbols from frequency offset and frequency drift and to feed said compensated result $q(k)$ to a demodulation reference estimation unit and a symbol demodulation unit, whereas the demodulation reference estimation unit is configured to support a symbol demodulation for the symbol decision and bit mapping.

It also relates to a method performed by the DSPK-receiver.

Generally, a receiver of a modem utilizes a single parameter estimation and demodulation path with fixed parameter settings to decide upon received data. By choice of architecture and parameterization, it performs well when receiving signal packets from a so-called "dirty" transmitter, which inherently delimits the performance when receiving signals from a "clean" transmitter, compared to theoretical limits.

A transmitter in a modem for wireless data transfer according to the Bluetooth (BT) standard (see "Bluetooth Core Specification, Rev 5.2, Bluetooth Special Interest Group, 2019-12-31") may behave "dirty", which implies that its carrier frequency may exhibit an oscillation over the duration of a transmitted packet. The standard, referenced above, defines limits for the time-varying offset from nominal carrier frequency as well as a worst-case transmitter model with sinusoidal frequency modulation of a certain amplitude and period. Transmitter implementations may perform as bad as defined, or better. This gives room for low-complexity / low-cost transmitter implementations compromising throughput performance. An advanced transmitter implementation may, however, behave totally "clean" in this respect, meaning that its carrier frequency may be regarded as stable for the duration of a packet, limited only by phase noise of the local oscillator, which may not harm the transmission. The Bluetooth test specification defines receiver performance tests using the above-mentioned worst case "dirty" transmitter, see "Radio Frequency Bluetooth Test Suite, Rev. RF.TS.p30 edition 2, Bluetooth Special Interest Group, 2020-01-27."

The requirement to support a "dirty" transmitter has impact on the design choices made in a receiver implementation. A receiver optimized for a "clean" transmitter might not be able to receive successfully any packet from a "dirty" transmitter. On the other hand, a receiver optimized for a "dirty" transmitter will still be able to receive from a "clean" transmitter, however, at some increase of error probability compared to theoretical limits.

This lack of error rate optimality when receiving packets from a "clean" transmitter using a receiver optimized for a "dirty" transmitter is particularly pronounced in Bluetooth Enhanced Data Rate operating modes, which utilize a serial differential phase shift keying (DPSK) transmission scheme.

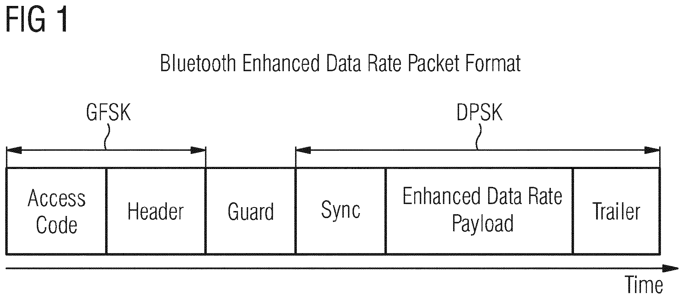

The standard defines 2 MBits/s and 3 MBits/s modes utilizing 4-DPSK and 8-DPSK alphabets, respectively. Figure 1 shows the packet structure for these modes. The first part of the packet is a preamble modulated using Gaussian Frequency Shift Keying (GFSK), and the second part of the packet utilizes Differential Phase Shift Keying (DPSK) modulation. That second part starts with the Sync field, which is a sequence of DPSK symbols known at the receiver, followed by unknown symbols selected at the transmitter according to the carried payload information, and a trailer. The trailer is not relevant for the invention.

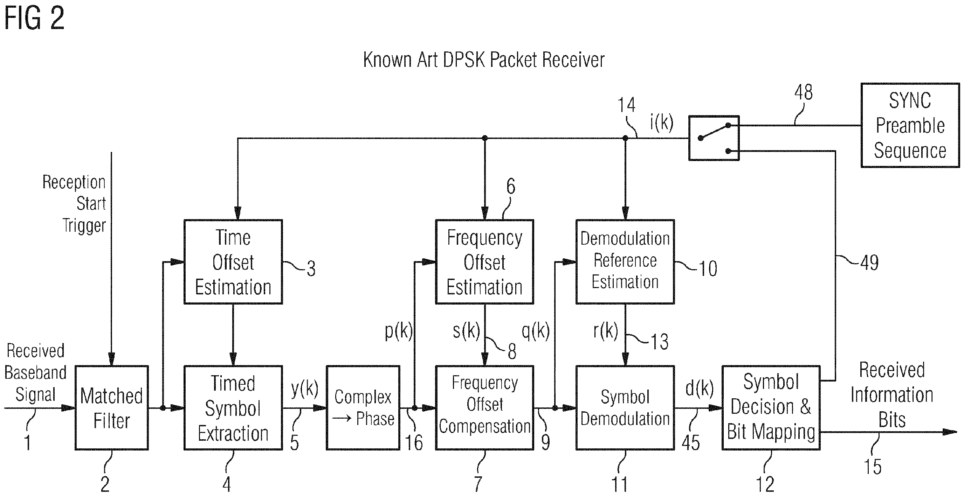

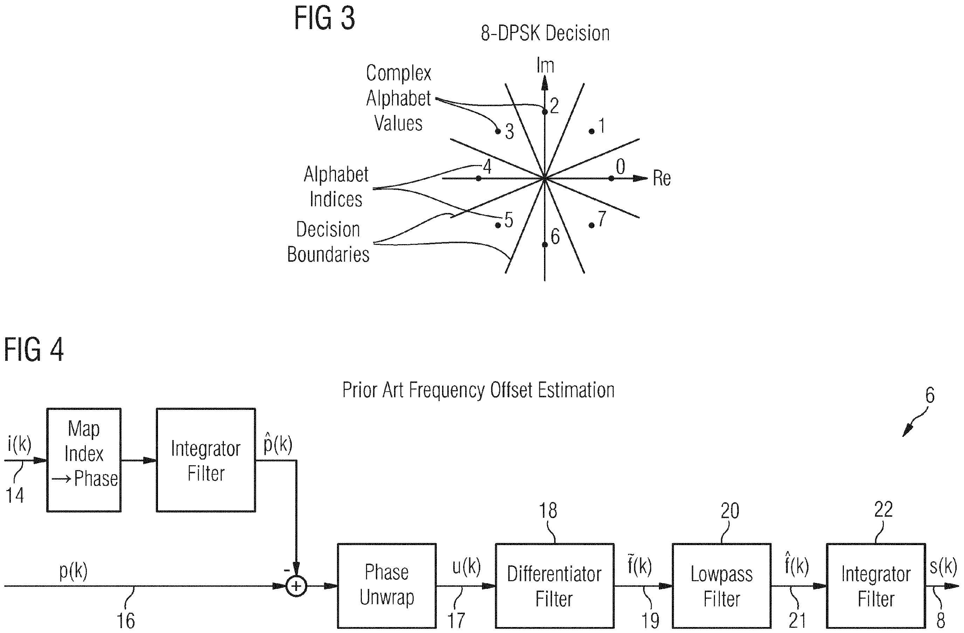

Figure 2 shows the general structure of a packet receiver for Differential Phase Shift Keying using decision feedback. During reception of the sync field, parameter estimators are fed with known symbols, and during payload reception, they are fed with previously decided symbols. Figure 3 shows how received noisy 8-DPSK symbols may be decided for and identified by their index. Parameter estimations include a time-offset estimation, a frequency offset estimation, and a demodulation reference estimation. In a simplest DPSK receiver, the demodulation reference for symbol $k$ would be symbol $k-1$, i. e., the previous symbol. In a more advanced receiver, multiple previous symbols are properly combined to obtain a less noisy demodulation reference, thus reducing the error probability. In US 2055/0008101 A1 a DPSK demodulator demodulates DPSK signals in a computationally efficient manner to reduce the power requirements of the DPSK demodulator. In Figure 2, matched filtering, time offset estimation and timed symbol extraction operate on complex baseband signals received from a transmitter. After conversion of complex values to phase values, the rest of the receiver works on phase values. It is alternatively possible to implement also the rest of the receiver using complex signals, or to process a mix of phase values and complex signal values in what comes after the timed symbol extraction.

Generally, a receiver operation is as follows: The received complex-valued baseband signal 1 comes at an oversampled rate with respect to the symbol rate defined in the receiver and passes through a matched filter 2. Time offset estimation performed by a time offset estimation unit 3 targets to obtain a sampling point of time where interference from previous and past symbols is minimal, and the timed symbol extraction performed by a timed symbol extraction unit 4 down-samples accordingly to the symbol rate. Phase values $p(k)$ 16 of obtained complex symbols $y(k)$ 5, with $k$ being the symbol index, feed a frequency offset estimation unit 6, which delivers phase sequences $s(k)$ 8 representing the slope of phase versus time caused by frequency offset and frequency drift.

Figure 4 details a possible frequency offset estimation unit 6 implementation regarded as known art. Known symbol indices 48, transmitted in the sync field, or decided symbol indices 49, transmitted in the payload field, are mapped to their corresponding phase values and accumulated over the packet received from the transmitter, thus replicating the sequence $\hat{p}(k)$ of sent phase values, assuming error-free reception. The accumulation therein mimics the differential modulation in a similar manner as it had happened at the transmitter. The difference from received phase values p(k) 16, $p(k) - \hat{p}(k)$ changes over time according to noise, frequency offset, and frequency drift. The unwrapped phase $u(k)$ 17 feeds a differentiator filter 18, which delivers an estimated instantaneous frequency offset $\tilde{f}(k)$ 19. A frequency offset estimation lowpass filter 20 reduces the noise-induced fluctuation of the instantaneous frequency offset 19 and delivers a more stable frequency offset estimate $\hat{f}(k)$ 21. Integrating the frequency offset estimate 21 yields the time-varying phase sequence $s(k)$ 8, which targets to replicate phase change due to frequency offset and frequency drift.

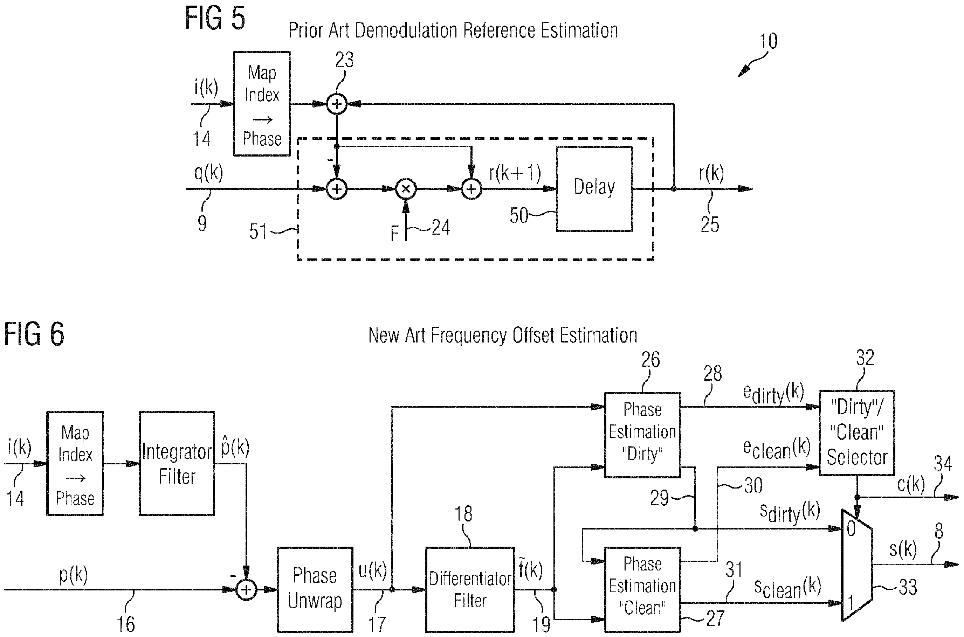

The frequency offset compensation unit 7 delivers phases $q(k)=p(k)-s(k)$ 9 into the demodulation reference estimation unit 10. Figure 5 details what is assumed as known-art demodulation reference symbol estimation unit 10 using a modified forget factor infinite impulse response (IIR) filter. The modification consist in adding 23 the phase of the just decided (or known) symbol $i(k)$ 14 to a filter memory 50, in order to always align the filter state phase with that of the previous symbol, which is utilized in the differential demodulation. The symbol demodulation unit 11 computes the phase difference $d(k)=q(k)-r(k)$ 45; symbol decision and bit mapping 12 happens by quantizing $d(k)$ according to the transmit symbol alphabet, with the example of 8-DPSK given in figure 3. $F$ represents the forget factor 24.

Within known-art receivers, there is only always a fix receive path that has to process the received packets of a clean as well as dirty transmitter. But, use cases with no line-of sight between two communicating BT modems, such as transmission between a mobile phone kept in a pocket, and ear-buds plugged into a person's ears, demand the least possible link loss. Developers can achieve this by implementing a clean transmitter on one side, and a receiver making best use of the clean signal on the other side. However, the receiver must still support "dirty" transmitters well. Thus, there is demand for receivers performing best with either "dirty" or "clean" transmitters.

Further common requirements on battery-powered devices for mass-market applications are low cost as well as low power consumption. They convert into the need for small hardware structures and low implementation complexity.

Thus, it is the objective of the present invention to present an apparatus and a method for adapting a receiver to the imperfection of a transmitter. This means that the receiver performance shall be adapted by reducing the error rate when receiving packets from a clean transmitter, assuming operation at a certain signal-to-noise ratio, where the noise is thermal noise from the radio frontend.

The objective of the invention will be solved by an apparatus according to independent claim 1.

A differential phase shift keying (DPSK) receiver for adapting to the imperfection of a transmitter according to the invention comprises means to receive signal packets from a transmitter, a time offset estimation and timed symbol extraction unit configured to output complex symbols $y(k)$ of the signal packet, with $k$ being a symbol index, and to feed $y(k)$ to a frequency offset estimation unit and a frequency offset compensation unit, whereas the frequency offset estimation unit is configured to deliver phase values $s(k)$ of the symbols $y(k)$ and the frequency offset compensation unit is configured to compensate the received symbols for frequency offset and frequency drift and to feed said compensated result $q(k)$ to a demodulation reference estimation unit and a symbol demodulation unit, whereas the demodulation reference estimation unit is configured to support a symbol demodulation for the symbol decision and bit mapping. According to the invention the frequency offset estimation unit comprises a first and a second phase estimation unit and a dirty-clean-selector, whereas the first phase estimation unit, outputting a first phase error estimate $e_{dirty}(k)$, comprises a first frequency offset estimation lowpass filter having a wider filter bandwidth than a second frequency offset estimation lowpass filter of the second phase estimation unit, outputting a second phase error estimate $e_{clean}(k)$, and the dirty-clean-selector is configured to compare a ratio of the second phase error estimate $e_{clean}(k)$ and the first phase error estimate $e_{dirty}(k)$ against a threshold value $T$ and outputting a binary comparison result $c(k)$, and the demodulation reference estimation unit comprises a first and a second filter, whereas the first filter as part of a "dirty"-receive path of the receiver has a wider filter bandwidth than the second filter as part of a "clean"-receive path of the receiver, whereas if the ratio of the second and first phase error estimates $e_{clean}(k)/e_{dirty}(k)$ falls below the threshold value $T$, the "clean"-receive path is used for outputting received information bits, otherwise the "dirty"-receive path of the receiver is used.

The key idea of the inventive new-art receiver is to run, in parallel, the distinguishing elements of receivers optimized for "dirty" and for "clean" transmitters, to assess the incoming packets on-the-fly with respect to the better suited receive path, and to utilize this better suited receive path. In a DPSK receiver the distinguishing elements are the frequency offset estimation lowpass filter and the demodulation reference filter; the receiver runs in parallel a wide filter as well as a narrow frequency offset estimation lowpass filter and a wide filter as well as a narrow filter for demodulation reference filtering. The output of the two frequency offset estimation lowpass filters are fed into respective sliding phase offset estimation filters and subsequent respective sliding phase error averaging filters. The assessment criterion is, if the ratio

$$\frac{e_{clean}(k)}{e_{dirty}(k)}$$

of the average amount of phase error between the narrow and wide frequency offset estimation lowpass filter outputs falls below a threshold $T$, the receiver utilizes the "clean"-receive path. A wide filter means a filter with a wider filter bandwidth than the narrow filter, which has a narrower filter bandwidth compared to the wide filter, respectively.

The inventive receiver reduces the error rate when receiving packets from a "clean" transmitter, assuming operation at a certain signal-to-noise ratio, where the noise is thermal noise from the radio frontend. As a result, the same error rate and thus the same user experience is possible under conditions of a larger link loss, which may come from a larger distance between transmitter and receiver, or from stronger signal attenuation by an obstructed radio wave propagation path between transmitter and receiver.

Threshold $T$ is determined by means of statistical simulation, targeting a minimum packet error rate in a mix of clean and dirty transmitter scenarios.

In a variant of the inventive DPSK-receiver, the frequency offset estimation unit comprises a phase selection switch, which is controlled by the output $c(k)$ of the dirty-clean-selector to select between a first phase sequence $s_{dirty}(k)$ and a second phase sequence $s_{clean}(k)$ outputted by the first and second phase estimation unit, respectively.

A first phase sequence $s_{dirty}(k)$ and a second phase sequence $s_{clean}(k)$ are used to be inputted to the frequency offset compensation unit in order to compensate the slope of phase versus time caused by frequency offset and frequency drift. The new art frequency offset estimator outputs the selected phase sequence $s(k)$ used for frequency offset compensation, i. e., both the frequency offset estimator as well as the phase reference estimator are switched.

In another variant of the inventive DPSK-receiver, the first and second phase estimation unit comprises means to average a difference between a fluctuating reference phase $u(k)$ and a low-noise phase sequence $s_{inst}(k)$ via a sliding phase offset estimation lowpass filter, adding said sliding phase offset estimation lowpass filter output to the low-noise phase sequence $s_{inst}(k)$, thus creating a low-noise sequence $\overline{u}_{inst}(k)$ with a mean of the fluctuating reference phase $u_{inst}(k)$, and passing an absolute difference of $u_{inst}(k)-\overline{u}_{inst}(k)$ through the respective sliding phase error averaging lowpass filter for outputting the phase error estimate $e_{dirty}(k)$ and $e_{clean}(k)$, respectively.

The index "inst" stands for "dirty" or "clean", respectively.

In another further variant of the inventive DPSK-receiver, the phase error estimates $e_{dirty}(k)$ and $e_{clean}(k)$ of the respective phase estimation unit are inputted to the dirty-clean-selector.

The underlying idea is that the first "dirty" phase estimation unit uses a first frequency offset estimation lowpass filter for frequency offset estimation with a wider bandwidth, which can better follow a frequency drift, as the second "clean" phase estimation unit, which uses a frequency offset estimation lowpass filter for frequency offset estimation with narrower filter bandwidth, which can better reject noise. Thus, generally, one phase estimation unit delivers an estimate of the phase fluctuation $e_{inst}(k)$ by averaging the difference between a fluctuating reference phase $u(k)$ and the low-noise phase sequence $s_{inst}(k)$ via a sliding phase offset estimation lowpass filter, adding the filter output signal to the low-noise phase sequence $s_{inst}(k)$, thus creating a low-noise phase sequence $\overline{u}_{inst}(k)$ with the mean of the fluctuating reference phase $u(k)$, and passing the absolute of the difference $u_{inst}(k) - \overline{u}_{inst}(k)$ through a sliding phase error averaging lowpass filter. The dirty-clean-selector compares the "clean"-receive path - second - phase error estimate $e_{clean}(k)$ and the "dirty"-receive path - first - phase error estimate $e_{dirty}(k)$ scaled by a threshold value $T$ and declares the packet as "clean" if the "clean" error estimate is smaller than "dirty" estimate scaled by the threshold value $T$.

In a variant of the inventive DPSK-receiver, the demodulation reference estimation unit comprises a demodulation reference selector configured to deliver a reference symbol $r(k)$, either $r_{dirty}(k)$ or $r_{clean}(k)$, determined/controlled by the output $c(k)$ of the dirty-clean-selector.

The inventive demodulation reference estimation unit comprises two paths for determining the reference symbols $r_{dirty}(k)$ and/or $r_{clean}(k)$. Each path comprises an infinite impulse response (IIR) lowpass filter; a filter of a first path has a wider filter bandwidth than a filter of a second path. The phase of a just decided (or known) symbol is added to a filter memory, in order to align the filter state phase with that of the previous symbol, which is utilized in the differential demodulation, respectively. The outputs of the two filter paths is inputted in a demodulation reference selector, which is controlled by the output $c(k)$ of the dirty-clean-selector. The resulting output $r(k)$ of the demodulation reference estimation unit is used for the symbol demodulation unit. The symbol demodulation computes the phase difference $d(k)=q(k)-r(k),$ and symbol decision happens by quantizing $d(k)$ according to a transmit symbol alphabet.

In another variant of the inventive DPSK-receiver, the demodulation reference estimation unit comprises a filter-coefficient-selector for choosing filter coefficients for either wide or narrow filter bandwidth and which is controlled by the output $c(k)$ of the dirty-clean-selector.

The dirty-clean-selector output $c(k)$ choses the filter coefficient of the filter-coefficient-selector for either wide or narrow filter bandwidth.

The objective of the invention will be also solved by a method according to independent claim 7.

The method for adapting a reception performance of a Bluetooth receiver to imperfection of a transmitter performed by a differential phase shift keying, DPSK-, receiver according to claims 1 to 6, comprises the following steps:

- receiving and matched filtering of a signal packet from a transmitter,
- obtaining a sampling point of time where interference from previous and past symbols is minimal by a time offset estimation unit,
- down-sampling the mapped symbols of the received packet to a symbol rate and obtaining complex symbols $y(k)$ by a timed symbol extraction unit,
- obtaining phase values $p(k)$ of the complex symbols $y(k)$ and feeding them to a frequency offset estimation unit and a frequency offset compensation unit,
- mapping symbol indices $i(k)$ to their corresponding phase values $p(k)$ and accumulating them over the received signal packet resulting in a replicated sequence $p(k)$,
- determining an unwrapped phase $u(k)$ of the difference $p(k) - \hat{p}(k)$, and feeding $u(k)$ to a differentiator filter delivering an estimated instantaneous frequency offset estimate $\tilde{f}(k)$, wherein
- inputting the instantaneous frequency offset estimate $\tilde{f}(k)$ to a first phase estimation unit, which outputs a first phase error estimate $e_{dirty}(k)$ and a first phase sequence $s_{dirty}(k)$, and to a second phase estimation unit, which outputs a second phase error estimate $e_{clean}(k)$ and a second phase sequence $s_{clean}(k)$, and
- comparing a ratio of the second and first phase error estimates $e_{clean}(k)$ and $e_{dirty}(k)$ against a threshold value $T$ by a dirty-clean-selector, and
- using a "clean"-receive path of a demodulation reference estimation unit of the receiver to output received information bits controlled by an output $c(k)$ of the dirty-clean-selector if the ratio of the second and first phase error estimates $e_{clean}(k)$ and $e_{dirty}(k)$ falls below the threshold value $T$, otherwise a "dirty"-receive path is used.

The first phase sequence $s_{dirty}(k)$ and the second phase sequence $s_{clean}(k)$ are used as input for the frequency offset compensation unit in order to deliver phases $q(k) = p(k)-s(k)$ into the demodulation reference estimation unit and the symbol demodulation unit.

The underlying idea is that the first phase estimation unit, also called a "dirty" phase estimation unit, uses a filter with a wider filter bandwidth than a filter of the second or "clean" phase estimation unit, which can better follow a frequency drift, and the "clean" phase estimation uses a narrower filter bandwidth, which can better reject noise.

According to the inventive method, the instantaneous frequency offset estimate $\tilde{f}(k)$ is lowpass filtered by two frequency offset estimation lowpass filters with different bandwidths to obtain a frequency offset estimate $f(k)$, which is integrated to obtain a sequence of phase values $s_{inst}(k)$ and a difference between a fluctuating reference phase $u(k)$ and the low-noise phase sequence $s_{inst}(k)$ is averaged via a sliding phase offset estimation lowpass filter and said sliding phase offset estimation lowpass filter output signal is added to the low-noise phase sequence $s_{inst}(k)$, thus creating a low-noise phase sequence $\overline{u}_{inst}(k)$ with a mean of the fluctuating reference phase $u(k)$, and passing an absolute of the difference $u(k) - \overline{u}_{inst}(k)$ through a sliding phase error averaging lowpass filter to deliver the phase error estimate $e_{inst}(k)$. The phase error estimate $e_{inst}(k)$ is either $e_{dirty}(k)$ when outputted by the first phase estimation unit or $e_{clean}(k)$ when outputted by the second phase estimation unit.

In a variant of the inventive method, the output $c(k)$ of the dirty-clean-selector controls a demodulation reference selector of the demodulation reference estimation unit to deliver a reference symbol $r_{dirty}(k)$ and $r_{clean}(k)$, which is inputted to a symbol demodulation unit.

In an alternative variant of the inventive method, the output $c(k)$ of the dirty-clean-selector controls a filter-selector of the demodulation reference estimation unit to choose filter coefficients for either wide or narrow filter bandwidth for a filter $F(k)$ of the demodulation reference estimation unit. The advantage is that only one receive path for both "dirty" and "clean" transmitters in the demodulation reference unit is necessary.

The invention will be explained in more detail using exemplary embodiments.

The appended drawings show

Fig. 1     Bluetooth enhanced data rate packet format;

Fig. 2     DPSK packet receiver according to the prior art;

Fig. 3     8-DPSK decision scheme;

Fig. 4     Frequency offset estimation unit according to the prior art;

Fig. 5     Demodulation reference estimation unit according to the prior art;

Fig. 6     Frequency offset estimation unit according to the invention;

Fig. 7      a) General phase estimation unit according to the invention; b) "dirty" phase estimation unit; c) "clean" phase estimation unit;

Fig. 8      Dirty-clean-selector according to the invention;

Fig. 9      Demodulation reference estimation unit according to a first embodiment of the invention;

Fig. 10      Alternative demodulation reference estimation unit according to a second embodiment of the invention.

Figure 6 shows the inventive frequency offset estimation unit, which is different from known art in what follows the differentiator filter 18, which yields the instantaneous frequency offset estimate $\tilde{f}(k)$ 19. A phase selection switch 33 selects between two different phase sequences 8, a first phase sequence $s_{dirty}(k)$ 29 and a second phase sequence $s_{clean}(k)$ 31, according to the comparison result of the dirty-clean-selector 32, which is fed with first phase error estimate $e_{dirty}(k)$ 28 and the second phase error estimate $e_{clean}(k)$ 30, both obtained from the first "dirty" 26 and second "clean" 27 phase estimation units or instances, respectively. The underlying idea is that the "dirty" phase estimation unit 26 uses a first frequency offset estimation lowpass filter 20a having a wider filter bandwidth than a second frequency offset estimation lowpass filter 20b of the second "clean" phase estimation unit 27, the first frequency offset estimation lowpass filter 20a can better follow a frequency drift, and the second "clean" phase estimation unit 27 uses a second frequency offset estimation lowpass filter 20b with a narrower filter bandwidth than the first phase estimation unit 26, the second frequency offset estimation lowpass filter 20b can better reject noise.

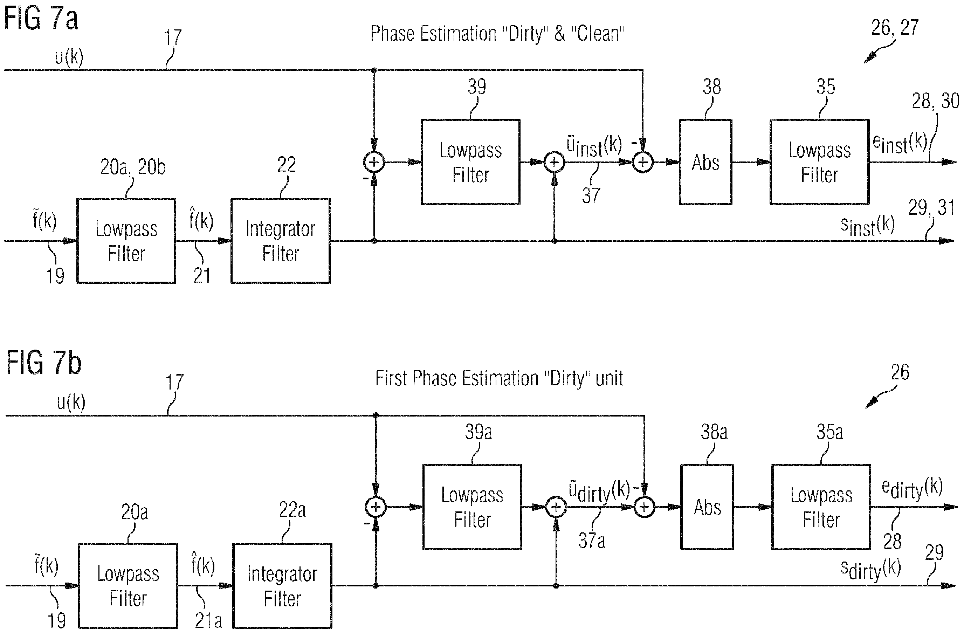

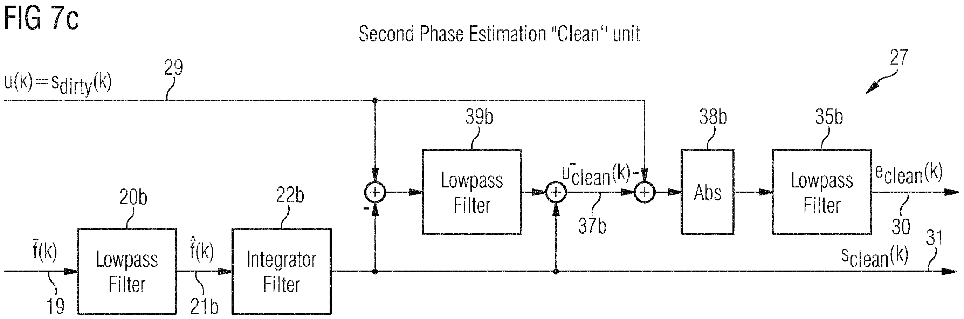

Figure 7 shows a detailed structure of the phase estimation unit 26, 27, either for "dirty" (Fig. 7b) or "clean" (Fig. 7c) phase error estimation. Like in the known-art frequency offset estimation unit 6 the instantaneous frequency offset $\tilde{f}(k)$ 19 is passed through a frequency offset estimation lowpass filter 20, 20a, 20b and the obtained frequency offset estimate $f(k)$ 21 is integrated 22, 22a, 22b to obtain a sequence of phase values $s_{inst}(\mathbf{k})$, which is either $s_{dirty}(k)$ 29 or $s_{clean}(k)$ 31. In addition, the phase estimation unit 26, 27 delivers an estimate of the amount of phase fluctuation disregarding constant phase offset, also called phase error estimate, $e_{inst}(k)$, hence $e_{dirty}(k)$ , $e_{clean}(k)$ 28, 30 by averaging the difference between a fluctuating reference phase $u$ $(k)$ 17 in the first phase estimation unit 26 or $u(k) = s_{dirty}(k)$ in the second phase estimation unit 27 and the low-noise phase sequence $s_{inst}(k)$, hence $s_{dirty}(k)$ in the first 26 and $s_{clean}(k)$ 31 in the second phase estimation unit 27 via a sliding phase offset estimation lowpass filter 39, 39a, 39b adding the filter output signal to the low-noise phase sequence $s_{inst}(\mathbf{k})$ 29, 31, thus creating a low-noise phase sequence $\overline{u}_{inst}(\mathbf{k})$ 37, 37a, 37b with the mean of the fluctuating reference phase $\mathbf{u}$ $(\mathbf{k})$ 17 or 29, and passing the absolute of the difference $u(k) - \overline{u}_{inst}(k)$ 38a, 38b through a further sliding phase error averaging lowpass filter 35, 35a, 35b, respectively.

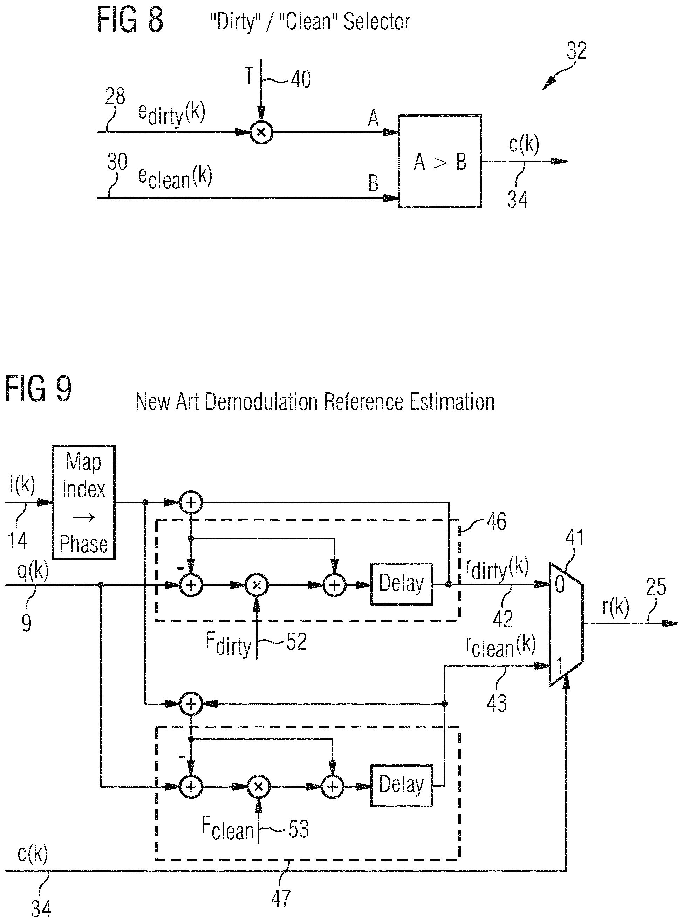

Figure 8 shows the functionality of the dirty-clean-selector 32. It compares the second "clean" path phase error estimate $e_{clean}(k)$ 30 with the first "dirty" path phase error estimate $e_{dirty}(k)$ 28, which is scaled by a threshold value T 40. If the "clean" path phase error estimate $e_{clean}(k)$ 30 is smaller than the scaled dirty path error estimate $T \cdot e_{dirty}(k)$, the dirty-clean-selector 8 declares the received signal as "clean", where $0 < T < 1$. In other words, if the ratio of error estimates is smaller than

$$\frac{e_{clean}(k)}{e_{dirty}(k)} < T$$

the threshold value, , the received signal is regarded as clean. If the transmitter behaves only somewhat "dirty", i. e., exhibits some amount of frequency modulation smaller than the worst case specified, the "dirty"/"clean" decision may alter back and forth during reception of a packet. The described method of weighting one of the estimates with the threshold value and then comparing is a low-complexity method for achieving exactly the ratio. Division operations needed to compute a ratio are generally more complex than multiplications.

The dirty-clean-selector output $c(k)$ 34 controls the new art demodulation reference estimation unit, as shown in figure 9. The demodulation reference estimation unit comprises two instantiations of a known-art demodulation reference estimation unit, one with a wide filter bandwidth 46 for the demodulation reference filter of the dirty-receive path delivering $r_{dirty}(\mathbf{k})$ 42 and a second with a narrow filter bandwidth 47 for the demodulation reference filter of the clean-receive path delivering $r_{clean}(\mathbf{k})$ 43, and a demodulation reference selector 41 delivering $r(\mathbf{k})$ 25 as determined by the dirty-clean-selector output $c(\mathbf{k})$ 34.

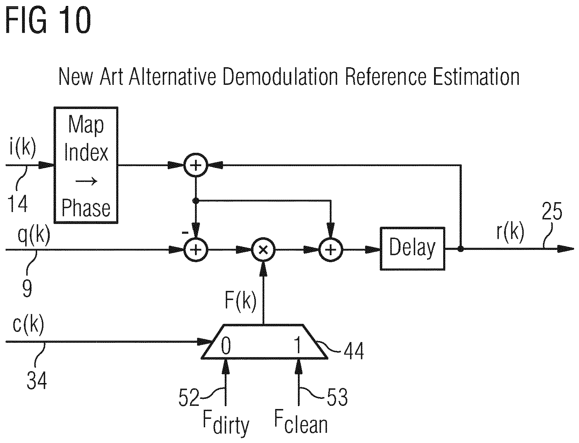

Figure 10 shows a further simplified version of the demodulation reference estimation unit, where the dirty-clean-selector output $c(\mathbf{k})$ 34 choses the filter coefficient for either wide or narrow filter bandwidth by triggering a filter-coefficient-selector 44. Compared to figure 9 there is some filter ring-in at the corner case when switching back and forth between "dirty" and "clean", which in practice degrades the error rate only by an amount so small that is not noticeable.

The key of the patent is to switch between two bandwidths of the frequency offset estimation lowpass filters 20a, 20b (Figs. 7a-c), as well as demodulation reference filters 52, 53 in Figs. 9, 10. To control this switch, the assessment functionality around the sliding phase offset estimation lowpass filter 39, 39a, 39b, the low-noise phase sequence 37, 37a, 37b the absolute calculation block 38, 38a, 38b and the sliding phase error averaging lowpass filter 35, 35a, 35b has been built in.

## List of Reference Signs

1 Received baseband signal
2 Matched filter
3 Time offset estimation unit
4 Timed symbol extraction unit
5 Complex symbol
6 Frequency offset estimation unit
7 Frequency offset compensation unit
8 Phase sequence
9 Compensated result
10 Demodulation reference estimation unit
11 Symbol demodulation unit
12 Symbol decision and bit-mapping unit
13 Resulting output of the demodulation reference estimation unit
14 Symbol index
15 Received information bits
16 Phase value
17 Unwrapped phase
18 Differentiator filter
19 Estimated instantaneous frequency offset $\tilde{f}(k)$
20 Frequency offset estimation lowpass filter
20a first frequency offset estimation lowpass filter "dirty"
20b second frequency offset estimation lowpass filter "clean"
21 frequency offset estimate $\hat{f}(k)$
21a frequency offset estimate $\hat{f}(k)$ "dirty"
21b frequency offset estimate $\hat{f}(k)$ "clean"
22 Integrator filter
22a Integrator filter "dirty"
22b Integrator filter "clean"
23 addition
24 Forget Factor
25 resulting output of the demodulation reference estimation unit
26 first phase estimation unit
27 second phase estimation unit
28 first phase error estimate $e_{dirty}(k)$
29 first phase sequence $s_{dirty}(k)$
30 second phase error estimate $e_{clean}(k)$
31 second phase sequence $s_{clean}(k)$
32 dirty-clean-selector
33 phase selection switch
34 output $c(k)$ of the dirty-clean-selector
35 sliding phase error averaging lowpass filter
35a sliding phase error averaging lowpass filter "dirty" path
35b sliding phase error averaging lowpass filter "clean" path

37 low-noise phase sequence $\overline{u}_{inst}(k)$
38 absolute calculation block
39 sliding phase offset estimation lowpass filter
39a sliding phase offset estimation lowpass filter "dirty" path
39b sliding phase offset estimation lowpass filter "clean" path
40 threshold value $T$
41 demodulation reference selector
42 first reference symbol $r_{dirty}(k)$
43 second reference symbol $r_{clean}(k)$
44 filter-coefficient-selector
45 phase difference
46 "dirty"-demodulation reference filter of the "dirty"-receive path
47 "clean"-demodulation reference filter of the "clean"-receive path
48 known symbol indices
49 decided symbol indices
50 filter memory
51 demodulation reference filter
52 filter coefficient for wide filter bandwidth
53 filter coefficient for narrow filter bandwidth

## Claims

1. A differential phase shift keying, DPSK-, receiver for adapting to the imperfection of a transmitter consisting in an undesired time-dependent variation of the carrier frequency, the receiver comprising means to receive signal packets from the transmitter, a time offset estimation (3) and timed symbol extraction unit (4) configured to output complex symbols $y(k)$ (5) of the signal packet, with $k$ being a symbol index, and to feed $y(k)$ to a frequency offset estimation unit (6) and a frequency offset compensation unit (7), whereas the frequency offset estimation unit (6) is configured to deliver phase values $s(k)$ (8) of the symbols $y(k)$ (5) and the frequency offset compensation unit (7) is configured to compensate the received symbols for frequency offset and frequency drift and to feed said compensated result $q(k)$ (9) to a demodulation reference estimation unit (10) and a symbol demodulation unit (11), whereas the demodulation reference estimation unit (10) is configured to support a symbol demodulation for the symbol decision and bit mapping, **characterized in, that** the frequency offset estimation unit (6) comprises a first (26) and a second (27) phase estimation unit and a dirty-clean-selector (32), whereas the first phase estimation unit (26), outputting a first phase error estimate $e_{dirty}(k)$ (28), comprises a first frequency offset estimation lowpass filter (20a) having a wider filter bandwidth than a second frequency offset estimation lowpass filter (20b) of the second phase estimation unit (27), outputting a second phase error estimate

$e_{clean}(k)$ (30), and the dirty-clean-selector (32) is configured to compare a ratio of the second phase error estimate $e_{clean}(k)$ (30) and the first phase error estimate $e_{dirty}(k)$ (28) against a threshold value T and outputting a binary comparison result $c(k)$ (34), and the demodulation reference estimation unit (10) comprises a first (46) and a second filter (47), whereas the first filter (46) as part of a "dirty"-receive path of the receiver has a wider filter bandwidth than the second filter (47) as part of a "clean"-receive-path of the receiver, whereas if the ratio of the second and first phase error estimates $e_{clean}(k)$ (28)/ $e_{dirty}(k)$ (30) falls below the threshold value *T,* the "clean"-receive path is used for outputting received information bits, otherwise the "dirty"-receive path is used.

2. The DPSK-receiver according to claim 1, **characterized in, that** the frequency offset estimation unit (6) comprises a phase selection switch (33), which is controlled by the output $c(k)$ (34) of the dirty-clean-selector (32) to select between a first phase sequence $s_{dirty}(k)$ (29) and a second phase sequence $s_{clean}(k)$ (31) outputted by the first (26) and second (27) phase estimation unit, respectively.

3. The DPSK-receiver according to claim 1, **characterized in, that** the first (26) and second (27) phase estimation unit comprises means to average a difference between a fluctuating reference phase $u(k)$ (17, 29) and a low-noise phase sequence $s_{inst}(k)$ (29, 31) via a sliding phase offset estimation lowpass filter (39, 39a, 39b), adding said lowpass filter output to the low-noise phase sequence $s_{inst}(k)$ (29, 31), thus creating a low-noise sequence $\overline{u}_{inst}(k)$ (37, 37a, 37b) with a mean of the fluctuating reference phase $u(k)$ (17, 29), and passing an absolute difference of $u(k) - \overline{u}_{inst}(k)$ (38, 38a, 38b) through a sliding phase error averaging lowpass filter (35, 35a, 35b) for outputting the phase error estimate $e_{dirty}(k)$ (28) and $e_{clean}(k)$ (30), respectively.

4. The DPSK-receiver according to claim 3, **characterized in, that** the phase error estimates $e_{dirty}(k)$ (28) and $e_{clean}(k)$ (30) of the respective phase estimation unit (26, 27) are inputted to the dirty-clean-selector (32).

5. The DPSK-receiver according to claim 1, **characterized in, that** the demodulation reference estimation unit (10) comprises a demodulation reference selector (41) configured to deliver a reference symbol $r_{dirty}(k)$ (42) and $r_{clean}(k)$ (43) determined/controlled by the output $c(k)$ (34) of the dirty-clean-selector (32).

6. The DPSK-receiver according to claim 1, **characterized in, that** the demodulation reference estimation unit (10) comprises a filter-coefficient-selector (44) for choosing filter coefficients for either wide or narrow filter bandwidth controlled by the output $c(k)$ *(34)* of the dirty-clean-selector (32).

7. A method for adapting a reception performance of a Bluetooth receiver to imperfection of a transmitter performed by a differential phase shift keying, DPSK-, receiver according to claims 1 to 6, the method comprising the following steps:

- receiving (1) and matched filtering (2) of a signal packet from a transmitter,
- obtaining a sampling point of time where interference from previous and past symbols is minimal by a time offset estimation unit (3),
- down-sampling the mapped symbols of the received packet to a symbol rate and obtaining complex symbols $y(k)$ (5) by a timed symbol extraction unit (4),
- obtaining phase values $p(k)$ (16) of the complex symbols $y(k)$ (5) and feeding them to a frequency offset estimation unit (6) and a frequency offset compensation unit (7),
- mapping symbol indices $i(k)$ (14) to their corresponding phase values $p(k)$ (16) and accumulating them over the received signal packet resulting in a replicated sequence $\hat{p}(k),$
- determining an unwrapped phase $u(k)$ (17) of the difference $p(k) - \hat{p}(k),$ and feeding $u(k)$ (17) to a differentiator filter (18) delivering an estimated instantaneous frequency offset estimate $\tilde{f}(k)$ (19), wherein
- inputting the instantaneous frequency offset estimate $\tilde{f}(k)$ (19) to a first phase estimation unit (26), which outputs a first phase error estimate $e_{dirty}(k)$ (28) and a first phase sequence $s_{dirty}(k)$ (29), and to a second phase estimation unit (27), which outputs a second phase error estimate $e_{clean}(k)$ (30) and a second phase sequence $s_{clean}(k)$ (31), and
- comparing a ratio of the second and first phase error estimates $e_{clean}(k)$ (30) and $e_{dirty}(k)$ (28) against a threshold value $T$ (40) by a dirty-clean-selector (32), and
- using a "clean"-receive path (47) of a demodulation reference estimation unit (10) of the receiver to output received information bits controlled by an output $c(k)$ (34) of the dirty-clean-selector (32) if the ratio of the second phase error estimate $e_{clean}(k)$ (30) and the first error estimate $e_{dirty}(k)$ (28) falls below the threshold value $T$ (40), otherwise a "dirty"-receive path (46) is used.

8. The method according to claim 7, **characterized in, that** the instantaneous frequency offset estimate $\tilde{f}(k)$ (19) in the first phase estimation unit (26) is lowpass filtered (20a) to obtain a frequency offset estimate $\hat{f}(k)$ (21a), which is integrated (22a) to obtain a sequence of phase values $s_{dirty}(k)$ (29) and a difference between a fluctuating reference phase $u(k)$ (17) and the low-noise phase sequence $s_{dirty}(k)$ (29) is averaged via a sliding phase offset estimation lowpass filter (39a) and adding the filter output signal to the low-noise phase sequence $s_{dirty}(k)$ (29), thus creating a low-noise phase sequence $\overline{u}_{dirty}(k)$ (37a) with a mean of the fluctuating reference phase $u(k)$, and passing an absolute of the difference $u(k)-\overline{u}_{dirty}(k)$ through the sliding phase error averaging lowpass filter (35a) to deliver the phase error estimate $e_{dirty}(k)$ (28).

9. The method according to claim 7, **characterized in, that** the instantaneous frequency offset estimate $\tilde{f}(k)$ (19) in the second phase estimation unit (27) is lowpass filtered (20b) to obtain a frequency offset estimate $\hat{f}(k)$ (21b), which is integrated (22b) to obtain a sequence of phase values $s_{clean}(k)$ (31) and a difference between a fluctuating reference phase $u(k)$ (29) and the low-noise phase sequence $s_{clean}(k)$ (31) is averaged via a sliding phase offset estimation lowpass filter (39b) and adding the filter output signal to the low-noise phase sequence $s_{clean}(k)$ (31), thus creating a low-noise phase sequence $\overline{u}_{clean}(k)$ (37b) with a mean of the fluctuating reference phase $u(k)$ (29), and passing an absolute of the difference $\overline{u}_{dirty}(k)-\overline{u}_{clean}(k)$ through the sliding phase error averaging lowpass filter (35b) to deliver the phase error estimate $e_{clean}(k)$ (30).

10. The method according to claim 7, **characterized in, that** the output $c(k)$ (34) of the dirty-clean-selector (32) controls a demodulation reference selector (41) of the demodulation reference estimation unit (10) to deliver a reference symbol $r_{dirty}(k)$ (42) and $r_{clean}(k)$ (43), which is inputted to a symbol demodulation unit (11).

11. The method according to claim 7, **characterized in, that** the output $c(k)$ (34) of the dirty-clean-selector (32) controls a filter-coefficient-selector (44) of the demodulation reference estimation unit (10) to choose filter coefficients (52, 53) for either wide or narrow filter bandwidth for the filter $F(k)$.

**Patentansprüche**

1. Empfänger für differentielle Phasenumtastung, DPSK-Empfänger, zum Anpassen an die Unvollkommenheit eines Senders, die in einer unerwünschten zeitabhängigen Variation der Trägerfrequenz besteht, wobei der Empfänger Mittel zum Empfangen von Signalpaketen von dem Sender, eine Zeitversatzschätz- (3) und eine zeitgesteuerte Symbolextraktions- (4) Einheit, die konfiguriert ist, komplexe Symbole $y(k)$ (5) des Signalpakets auszugeben, wobei $k$ ein Symbolindex ist, und $y(k)$ in eine Frequenzversatz-Schätzeinheit (6) und eine Frequenzversatz-Kompensationseinheit (7) einzuspeisen, umfasst, während die Frequenzversatz-Schätzeinheit (6) konfiguriert ist, Phasenwerte $s(k)$ (8) der Symbole $y(k)$ zu liefern, und die Frequenzversatz-Kompensationseinheit (7) konfiguriert ist, die empfangenen Symbole für einen Frequenzversatz und eine Frequenzdrift zu kompensieren und das kompensierte Ergebnis $q(k)$ (9) in eine Demodulationsreferenz-Schätzeinheit (10) und eine Symboldemodulationseinheit (11) einzuspeisen, während die Demodulationsreferenz-Schätzeinheit (10) konfiguriert ist, eine Symboldemodulation für die Symbolentscheidung und die Bit-Abbildung zu unterstützen, **dadurch gekennzeichnet, dass** die Frequenzversatz-Schätzeinheit (6) eine erste (26) und eine zweite (27) Phasenschätzeinheit und eine Schmutzig-Sauber-Auswahlvorrichtung (32) umfasst, während die erste Phasenschätzeinheit (26), die eine erste Phasenfehlerschätzung $e_{dirty}(k)$ (28) ausgibt, ein erstes Frequenzversatzschätzungs-Tiefpassfilter (20a) umfasst, das eine breitere Filterbandbreite als ein zweites Frequenzversatzschätzungs-Tiefpassfilter (20b) der zweiten Phasenschätzeinheit (27) aufweist, die eine zweite Phasenfehlerschätzung $e_{clean}(k)$ (30) ausgibt, und die Schmutzig-Sauber-Auswahlvorrichtung (32) konfiguriert ist, ein Verhältnis der zweiten Phasenfehlerschätzung $e_{clean}(k)$ (30) und der ersten Phasenfehlerschätzung $e_{dirty}(k)$ (28) gegen einen Schwellenwert $T$ zu vergleichen und ein binäres Vergleichsergebnis $c(k)$ (34) auszugeben, wobei die Demodulationsreferenz-Schätzeinheit (10) ein erstes (46) und ein zweites (47) Filter umfasst, während das erste Filter (46) als Teil eines "Schmutzig"-Empfangswegs des Empfängers eine breitere Filterbandbreite als das zweite Filter (47) als Teil eines "Sauber"-Empfangswegs des Empfängers aufweist, während, falls das Verhältnis der zweiten und der ersten Phasenfehlerschätzung $e_{clean}(k)$ (28)/$e_{dirty}(k)$ (30) unter den Schwellenwert $T$ fällt, der "Sauber"-Empfangsweg zum Ausgeben der empfangenen Informationsbits verwendet wird, wobei andernfalls der "Schmutzig"-Empfangsweg verwendet wird.

2. DPSK-Empfänger nach Anspruch 1, **dadurch gekennzeichnet, dass** die Frequenzversatz-Schätzeinheit (6) einen Phasenauswahlschalter (33) umfasst, der durch die Ausgabe $c(k)$ (34) der Schmutzig-Sauber-Auswahlvorrichtung (32) gesteuert ist, um zwischen einer ersten Phasenfolge $s_{dirty}(k)$ (29) und einer zweiten Phasenfolge $s_{clean}(k)$ (31), die durch die erste (26) bzw. die zweite (27) Phasenschätzeinheit ausgegeben wird, auszuwählen.

3. DPSK-Empfänger nach Anspruch 1, **dadurch gekennzeichnet, dass** die erste (26) und die zweite (27) Phasenschätzeinheit Mittel zum Mitteln einer Differenz zwischen einer fluktuierenden Referenzphase $u(k)$ (17, 29) und einer rauscharmen Phasenfolge $s_{inst}(k)$ (29, 31) über ein gleitendes Phasenversatzschätzungs-Tiefpassfilter (39, 39a, 39b), Addieren der Tiefpassfilterausgabe zu der rauscharmen Phasenfolge $s_{inst}(k)$ (29, 31), folglich Erzeugen einer rauscharmen Folge $\overline{u}_{inst}(k)$ (37, 37a, 37b) mit einem Mittelwert der fluktuierenden Referenzphase $u(k)$ (17, 29), und Leiten einer absoluten Differenz $u(k) - \overline{u}_{inst}(k)$ (38, 38a, 38b) durch ein gleitendes Phasenfehlermittelungs-Tiefpassfilter (35, 35a, 35b) zum Ausgeben der Phasenfehlerschätzung $e_{dirty}(k)$ (28) bzw. $e_{clean}(k)$ (30) umfassen.

4. DPSK-Empfänger nach Anspruch 3, **dadurch gekennzeichnet, dass** die Phasenfehlerschätzungen $e_{dirty}(k)$ (28) bzw. $e_{clean}(k)$ (30) der jeweiligen Phasenschätzeinheit (26, 27) in die Schmutzig-Sauber-Auswahlvorrichtung (32) eingegeben werden.

5. DPSK-Empfänger nach Anspruch 1, **dadurch gekennzeichnet, dass** die Demodulationsreferenz-Schätzeinheit (10) eine Demodulationsreferenz-Auswahlvorrichtung (41) umfasst, die konfiguriert ist, ein Referenzsymbol $r_{dirty}(k)$ (42) und $r_{clean}(k)$ (43) zu liefern, das durch die Ausgabe $c(k)$ (34) der Schmutzig-Sauber-Auswahlvorrichtung (32) bestimmt/gesteuert ist.

6. DPSK-Empfänger nach Anspruch 1, **dadurch gekennzeichnet, dass** die Demodulationsreferenz-Schätzeinheit (10) eine Filterkoeffizienten-Auswahlvorrichtung (44) zum Auswählen von Filterkoeffizienten für entweder eine breite oder eine schmale Filterbandbreite umfasst, die durch die Ausgabe $c(k)$ (34) der Schmutzig-Sauber-Auswahlvorrichtung (32) gesteuert ist.

7. Verfahren zum Anpassen einer Empfangsleistung eines Bluetooth-Empfängers an die Unvollkommenheit eines Senders, das durch einen Empfänger für differentielle Phasenumtastung, DPSK-Empfänger, nach den Ansprüchen 1 bis 6 ausgeführt wird, wobei das Verfahren die folgenden Schritte umfasst:

   - Empfangen (1) und angepasstes Filtern (2) eines Signalpakets von einem Sender,
   - Erhalten eines Abtastzeitpunkts, zu dem die Störung von früheren und vergangenen Symbolen minimal ist, durch eine Zeitversatzschätzeinheit (3),
   - Unterabtasten der abgebildeten Symbole des empfangenen Pakets auf eine Symbolrate und Erhalten komplexer Symbole $y(k)$ (5) durch eine zeitgesteuerte Symbolextraktionseinheit (4),
   - Erhalten von Phasenwerten $p(k)$ (16) der komplexen Symbole $y(k)$ (5) und Einspeisen dieser in eine Frequenzversatz-Schätzeinheit (6) und eine Frequenzversatz-Kompensationseinheit (7),
   - Abbilden von Symbolindizes $i(k)$ (14) auf ihre entsprechenden Phasenwerte $p(k)$ (16) und Ansammeln dieser über dem empfangenen Signalpaket, was zu einer reproduzierten Folge $\hat{p}(k)$ führt,
   - Bestimmen einer ausgewickelten Phase $u(k)$ (17) der Differenz $p(k) - \hat{p}(k)$ und Einspeisen von $u(k)$ (17) in ein Differenziererfilter (18), das eine geschätzte momentane Frequenzversatzschätzung $\tilde{f}(k)$ liefert, wobei
   - Eingeben der momentanen Frequenzversatzschätzung $\tilde{f}(k)$ in eine erste Phasenschätzeinheit (26), die eine erste Phasenfehlerschätzung $e_{dirty}(k)$ (28) und eine erste Phasenfolge $s_{dirty}(k)$ (29) ausgibt, und in eine zweite Phasenschätzeinheit (27), die eine zweite Phasenfehlerschätzung $e_{clean}(k)$ (30) und eine zweite Phasenfolge $s_{clean}(k)$ (31) ausgibt, und
   - Vergleichen eines Verhältnisses der zweiten und der ersten Phasenfehlerschätzung $e_{clean}(k)$ (30) und $e_{dirty}(k)$ (28) gegen einen Schwellenwert $T$ (40) durch eine Schmutzig-Sauber-Auswahlvorrichtung (32) und
   - Verwenden eines "Sauber"-Empfangswegs (47) einer Demodulationsreferenz-Schätzeinheit (10) des Empfängers, um empfangene Informationsbits auszugeben, die durch eine Ausgabe $c(k)$ (34) der Schmutzig-Sauber-Auswahlvorrichtung (32) gesteuert sind, falls das Verhältnis der zweiten Phasenfehlerschätzung $e_{clean}(k)$ (30) und der ersten Phasenfehlerschätzungen $e_{dirty}(k)$ (28) unter den Schwellenwert $T$ (40) fällt, wobei andernfalls ein "Schmutzig"-Empfangsweg verwendet wird.

8. Verfahren nach Anspruch 7, **dadurch gekennzeichnet, dass** die momentane Frequenzversatzschätzung $\tilde{f}(k)$ in der ersten Phasenschätzeinheit (26) tiefpassgefiltert (20a) wird, um eine Frequenzversatzschätzung $\tilde{f}(k)$ (21a) zu erhalten, die integriert (22a) wird, um eine Folge von Phasenwerten $s_{dirty}(k)$ (29) zu erhalten, wobei eine Differenz zwischen einer fluktuierenden Referenzphase $u(k)$ (17) und der rauscharmen Phasenfolge $s_{dirty}(k)$ (29) über ein gleitendes Phasenversatzschätzungs-Tiefpassfilter (39a) gemittelt wird, und Addieren des Filterausgangssignals zu der rauscharmen Phasenfolge $s_{dirty}(k)$ (29), folglich Erzeugen einer rauscharmen Phasenfolge $\overline{u}_{\mathbf{dirty}}(k)$, die ein Mittelwert der fluktuierenden Referenzphase $u(k)$ ist, und Leiten eines Absolutwerts der Differenz $u(k)$ - $\overline{u}_{\mathbf{dirty}}(k)$ durch das gleitende Phasenfehlermittelungs-Tiefpassfilter (35a), um die Phasenfehlerschätzung $e_{dirty}(k)$ (28) zu liefern.

9. Verfahren nach Anspruch 7, **dadurch gekennzeichnet, dass** die momentane Frequenzversatzschätzung $\tilde{f}(k)$ (19) in der zweiten Phasenschätzeinheit (27) tiefpassgefiltert (20b) wird, um eine Frequenzversatzschätzung $\tilde{f}(k)$ (21b) zu erhalten, die integriert (22a) wird, um eine Folge von Phasenwerten $s_{clean}(k)$ (31) zu erhalten, wobei eine Differenz zwischen einer fluktuierenden Referenzphase $u(k)$ (29) und der rauscharmen Phasenfolge $s_{clean}(k)$ (31) über ein gleitendes Phasenversatzschätzungs-Tiefpassfilter (39b) gemittelt wird, und Addieren des Filterausgangssignals zu der rauscharmen Phasenfolge $s_{clean}(k)$ (31), folglich Erzeugen einer rauscharmen Phasenfolge $\overline{u}_{\mathbf{clean}}(k)$ (37b), die ein Mittelwert der fluktuierenden Referenzphase $u(k)$ (29) ist, und Leiten eines Absolutwerts der Differenz $u_{dirty}(k)$ - $\overline{u}_{clean}(k)$ durch das gleitende Phasenfehlermittelungs-Tiefpassfilter (35b), um die Phasenfehlerschätzung $e_{clean}(k)$ (30) zu liefern.

10. Verfahren nach Anspruch 7, **dadurch gekennzeichnet, dass** die Ausgabe $c(k)$ (34) der Schmutzig-Sauber-Auswahlvorrichtung (32) eine Demodulationsreferenz-Auswahlvorrichtung (41) der Demodulationsreferenz-Schätzeinheit (10) steuert, um ein Referenzsymbol $r_{dirty}(k)$ (42) und $r_{clean}(k)$ (43) zu liefern, das in eine Symboldemodulationseinheit (11) eingegeben wird.

11. Verfahren nach Anspruch 7, **dadurch gekennzeichnet, dass** die Ausgabe $c(k)$ (34) der Schmutzig-Sauber-Auswahlvorrichtung (32) eine Filterkoeffizienten-Auswahlvorrichtung (44) der Demodulationsreferenz-Schätzeinheit (10) steuert, um die Filterkoeffizienten (52, 53) für entweder eine breite oder eine schmale Filterbandbreite für das Filter $F(k)$ zu wählen.

## Revendications

1. Récepteur à modulation par déplacement de phase différentielle, DPSK, destiné à s'adapter à l'imperfection d'un émetteur consistant en une variation tributaire du temps non souhaitée de la fréquence porteuse, le récepteur comprenant des moyens pour recevoir des paquets de signaux à partir de l'émetteur, une unité d'estimation de décalage temporel (3) et d'extraction de symboles temporisés (4) configurée pour produire en sortie des symboles complexes $y(k)$ (5) du paquet de signal, $k$ étant un indice de symbole, et fournir $y(k)$ à une unité d'estimation de décalage de fréquence (6) et une unité de compensation de décalage de fréquence (7), considérant que l'unité d'estimation de décalage de fréquence (6) est configurée pour délivrer des valeurs de phase $s(k)$ (8) des symboles $y(k)$ (5) et l'unité de compensation de décalage de fréquence (7) est configurée pour compenser les symboles reçus en termes de décalage de fréquence et de dérive de fréquence et passer ledit résultat compensé $q(k)$ (9) à une unité d'estimation de référence de démodulation (10) et une unité de démodulation de symboles (11), considérant que l'unité d'estimation de référence de démodulation (10) est configurée pour prendre en charge une démodulation de symboles en vue de la décision de symboles et du mappage de bits, **caractérisé en ce que** l'unité d'estimation de décalage de fréquence (6) comprend une première (26) et une seconde (27) unité d'estimation de phase et un sélecteur sale-propre (32), considérant que la première unité d'estimation de phase (26), qui produit en sortie une première estimation d'erreur de phase $e_{sale}(k)$ (28), comprend un premier filtre passe-bas d'estimation de décalage de fréquence (20a) ayant une largeur de bande de filtre plus large qu'un second filtre passe-bas d'estimation de décalage de fréquence (20b) de la seconde unité d'estimation de phase (27), qui produit en sortie une seconde estimation d'erreur de phase $e_{propre}(k)$ (30), et le sélecteur sale-propre (32) est configuré pour comparer un rapport entre la seconde estimation d'erreur de phase $e_{propre}(k)$ (30) et la première estimation d'erreur de phase $e_{sale}(k)$ (28) à une valeur seuil $T$ et produire en sortie un résultat de comparaison binaire $c(k)$ (34) et l'unité d'estimation de référence de démodulation (10) comprend un premier (46) et un second filtre (47), considérant que le premier filtre (46) en tant que partie d'un chemin de réception "sale" du récepteur a une largeur de bande de filtre plus large que le second filtre (47) en tant que partie d'un chemin de réception "propre" du récepteur, considérant que si le rapport des première et seconde estimations d'erreur de phase $e_{propre}(k)$ (28)/$e_{sale}(k)$ (30) tombe en dessous de la valeur seuil $T,$ le chemin de réception "propre" est utilisé pour la production en sortie de bits d'informations reçus, sinon le chemin de réception "sale" est utilisé.

2. Récepteur DPSK récepteur selon la revendication 1,

**caractérisé en ce que** l'unité d'estimation de décalage de fréquence (6) comprend un commutateur de sélection de phase (33), lequel est commandé par la sortie *c(k)* (34) du sélecteur sale-propre (32) pour sélectionner entre une première séquence de phase $s_{sale}(k)$ (29) et une seconde séquence de phase $s_{propre}(k)$ (31) produites respectivement par la première (26) et la seconde (27) unité d'estimation de phase.

3. Récepteur DPSK selon la revendication 1, **caractérisé en ce que** les première (26) et seconde (27) unités d'estimation de phase comprennent des moyens pour moyenner une différence entre une phase de référence fluctuante *u(k)* (17, 29) et une séquence de phase à faible bruit $s_{inst}(k)$ (29, 31) par l'intermédiaire d'un filtre passe-bas d'estimation de décalage de phase à fenêtre glissante (39, 39a, 39b), qui ajoute ladite sortie de filtre passe-bas à la séquence de phase de faible bruit $s_{inst}(k)$ (29, 31), créant ainsi une séquence à faible bruit $\overline{u}_{inst}(k)$ (37, 37a, 37b) avec une moyenne de la phase de référence fluctuante *u(k)* (17, 29), et passant une différence absolue de $u(k) - \overline{u}_{inst}(k)$ (38, 38a, 38b) par un filtre passe-bas de moyennage d'erreur de phase à fenêtre glissante (35, 35a, 35b) pour produire en sortie l'estimation d'erreur de phase $e_{sale}(k)$ (28) et $e_{propre}(k)$ (30), respectivement.

4. Récepteur DPSK selon la revendication 3, **caractérisé en ce que** les estimations d'erreur de phase $e_{sale}(k)$ (28) et $e_{propre}(k)$ (30) de l'unité d'estimation de phase respective (26, 27) sont entrées dans le sélecteur sale-propre (32).

5. Récepteur DPSK selon la revendication 1, **caractérisé en ce que** l'unité d'estimation de référence de démodulation (10) comprend un sélecteur de référence de démodulation (41) configuré pour délivrer un symbole de référence $r_{sale}(k)$ (42) et $r_{propre}(k)$ (43) déterminé/commandé par la sortie *c(k)* (34) du sélecteur sale-propre (32).

6. Récepteur DPSK selon la revendication 1, **caractérisé en ce que** l'unité d'estimation de référence de démodulation (10) comprend un sélecteur de coefficients de filtre (44) pour sélectionner des coefficients de filtre pour une largeur de bande de filtre large ou étroite commandée par la sortie *c(k)* (34) du sélecteur sale-propre (32).

7. Procédé d'adaptation d'une performance de réception d'un récepteur Bluetooth à l'imperfection d'un émetteur réalisé par un récepteur à modulation par déplacement de phase différentielle, DPSK, selon les revendications 1 à 6, le procédé comprenant les étapes suivantes :

- la réception (1) et le filtrage adapté (2) d'un paquet de signal à partir d'un émetteur,
- l'obtention d'un instant d'échantillonnage où les interférences des symboles précédents et passés sont minimales par une unité d'estimation de décalage temporel (3),
- le sous-échantillonnage des symboles mappés du paquet reçu à une fréquence de symboles et l'obtention de symboles complexes *y(k)* (5) par une unité d'extraction de symboles temporisés (4),
- l'obtention de valeurs de phase *p(k)* (16) des symboles complexes *y(k)* (5) et leur introduction dans une unité d'estimation de décalage de fréquence (6) et une unité de compensation de décalage de fréquence (7),
- le mappage d'indices de symboles *i(k)* (14) sur leurs valeurs de phase correspondantes *p(k)* (16) et leur accumulation sur le paquet de signal reçu, produisant ainsi une séquence répliquée $\hat{p}(k)$,
- la détermination d'une phase *u(k)* (17) déroulée de la différence $p(k) - \hat{p}(k)$, et le passage de *u(k)* (17) à un filtre différenciateur (18) qui délivre une estimation de décalage de fréquence instantané estimé $\tilde{f}(k)$ (19),

dans lequel

- l'entrée de l'estimation de décalage de fréquence instantané $\tilde{f}(k)$ (19) dans une première unité d'estimation de phase (26), laquelle produit en sortie une première estimation d'erreur de phase $e_{sale}(k)$ (28) et une première séquence de phase $s_{sale}(k)$ (29) et dans une seconde unité d'estimation de phase (27), laquelle produit en sortie une seconde estimation d'erreur de phase $e_{propre}(k)$ (30) et une seconde séquence de phase $s_{propre}(k)$ (31), et
- la comparaison d'un rapport des seconde et première estimations d'erreur de phase $e_{propre}(k)$ (30) et $e_{sale}(k)$ (28) à une valeur seuil *T* (40) par un sélecteur sale-propre (32), et
- l'utilisation d'un chemin de réception "propre" (47) d'une unité d'estimation de référence de démodulation (10) du récepteur pour produire en sortie des bits d'information reçus commandés par une sortie *c(k)* (34) du sélecteur sale-propre (32) si le rapport de la seconde estimation d'erreur de phase $e_{propre}(k)$ (30) et de la première estimation d'erreur $e_{sale}(k)$ (28) tombe en dessous de la valeur seuil T (40), sinon, l'utilisation d'un chemin de réception "sale" (46).

8. Procédé selon la revendication 7, **caractérisé en ce que** l'estimation de décalage de fréquence instantané $\tilde{f}(k)$ (19) dans la première unité d'estimation de phase (26) est filtrée en passe-bas (20a) pour obtenir une estimation de décalage de fréquence $\tilde{f}(k)$ (21a), laquelle est intégrée (22a) pour obtenir une séquence de valeurs de phase $s_{sale}(k)$ (29) et une différence entre une phase de référence fluctuante $u(k)$ (17) et la séquence de phase à faible bruit $s_{sale}(k)$ (29) est moyennée par l'intermédiaire d'un filtre passe-bas d'estimation de décalage de phase à fenêtre glissante (39a) et en ajoutant le signal de sortie du filtre à la séquence de phase à faible bruit $s_{sale}(k)$ (29), créant ainsi une séquence de phase à faible bruit $\overline{u}_{sale}(k)$ (37a) avec une moyenne de la phase de référence fluctuante $u(k)$, et en passant un absolu de la différence $u(k) - \overline{u}_{sale}(k)$ par le filtre passe-bas de moyennage d'erreur de phase à fenêtre glissante (35a) pour délivrer l'estimation d'erreur de phase $e_{sale}(k)$ (28) .

9. Procédé selon la revendication 7, **caractérisé en ce que** l'estimation de décalage de fréquence instantané $\tilde{f}(k))$ (19) dans la seconde unité d'estimation de phase (27) est filtrée en passe-bas (20b) pour obtenir une estimation de décalage de fréquence $\tilde{f}(k)$ (21b), laquelle est intégrée (22b) pour obtenir une séquence de valeurs de phase $s_{propre}(k)$ (31) et une différence entre une phase de référence fluctuante $u(k)$ (29) et la séquence de phase à faible bruit $s_{propre}(k)$ (31) est moyennée par l'intermédiaire d'un filtre passe-bas d'estimation de décalage de phase à fenêtre glissante (39b) et en ajoutant le signal de sortie de filtre à la séquence de phase à faible bruit $s_{propre}(k)$ (31), créant ainsi une séquence de phase à faible bruit $\overline{u}_{propre}(k)$ (37b) avec une moyenne de la phase de référence fluctuante $u(k)$ (29) et passant un absolu de la différence $u_{sale}(k) - \overline{u}_{propre}(k)$ à travers le filtre passe-bas de moyennage d'erreur de phase à fenêtre glissante (35b) pour délivrer l'estimation d'erreur de phase $e_{propre}(k)$ (30) .

10. Procédé selon la revendication 7, **caractérisé en ce que** la sortie $c(k)$ (34) du sélecteur sale-propre (32) commande un sélecteur de référence de démodulation (41) de l'unité d'estimation de référence de démodulation (10) pour délivrer un symbole de référence $r_{sale}(k)$ (42) et $r_{propre}(k)$ (43), lequel est entré dans une unité de démodulation de symbole (11).

11. Procédé selon la revendication 7, **caractérisé en ce que** la sortie $c(k)$ (34) du sélecteur sale-propre (32) commande un sélecteur de coefficients de filtre (44) de l'unité d'estimation de référence de démodulation (10) pour choisir des coefficients de filtre (52, 53) pour une largeur de bande de filtre large ou étroite pour le filtre $F(k)$.

# FIG 1

Bluetooth Enhanced Data Rate Packet Format

GFSK

DPSK

| Access Code | Header | Guard | Sync | Enhanced Data Rate Payload | Trailer |
|---|---|---|---|---|---|

Time

# FIG 2

Known Art DPSK Packet Receiver

EP 4 111 653 B1

## FIG 3

8-DPSK Decision

Complex Alphabet Values

Alphabet Indices

Decision Boundaries

## FIG 4

Prior Art Frequency Offset Estimation

FIG 5    Prior Art Demodulation Reference Estimation

FIG 6    New Art Frequency Offset Estimation

EP 4 111 653 B1

FIG 7a

Phase Estimation "Dirty" & "Clean"

$\tilde{f}(k)$ — 19 → Lowpass Filter (20a, 20b) → $\hat{f}(k)$ — 21 → Integrator Filter (22) → Lowpass Filter (39) → $\bar{u}_{inst}(k)$ — 37 → Abs (38) → Lowpass Filter (35) → $e_{inst}(k)$ (28, 30)

$u(k)$ — 17

$s_{inst}(k)$ (29, 31)

26, 27

FIG 7b

First Phase Estimation "Dirty" unit

$\tilde{f}(k)$ — 19 → Lowpass Filter (20a) → $\hat{f}(k)$ — 21a → Integrator Filter (22a) → Lowpass Filter (39a) → $\bar{u}_{dirty}(k)$ — 37a → Abs (38a) → Lowpass Filter (35a) → $e_{dirty}(k)$ — 28

$u(k)$ — 17

$s_{dirty}(k)$ — 29

26

EP 4 111 653 B1

**FIG 7c**

Second Phase Estimation "Clean" unit

$u(k) = s_{dirty}(k)$    29

27

Lowpass Filter 39b

$u_{clean}^-(k)$ 37b

Abs 38b

Lowpass Filter 35b

$e_{clean}(k)$ 30

$\tilde{f}(k)$ 19

Lowpass Filter 20b

$\hat{f}(k)$ 21b

Integrator Filter 22b

$s_{clean}(k)$ 31

FIG 8    "Dirty" / "Clean" Selector

FIG 9    New Art Demodulation Reference Estimation

# FIG 10

New Art Alternative Demodulation Reference Estimation

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20550008101 A1

**Non-patent literature cited in the description**

- Bluetooth Core Specification. *Rev 5.2, Bluetooth Special Interest Group,* 31 December 2019

- Radio Frequency Bluetooth Test Suite. Bluetooth Special Interest Group. 27 January 2020, 30